# EUROPEAN PATENT APPLICATION

(11) **EP 2 308 307 A2**
(43) Date of publication of application: **13.04.2011**
(21) Application number: 10184265.6
(22) Date of filing: 26.05.2006
(51) Int. Cl.: A01N 51/00, A01N 47/40, A01N 43/40

(54) **Increase of stress tolerance by application of neonicotinoids on plants engineered to be stress tolerant**

(30) Priority: 04.06.2005 EP 05012090
(62) Divisional of application: 06743074.4
(71) Applicant: Bayer CropScience AG, 40789 Monheim (DE)
(72) Inventor: Thielert, Wolfgang, Dr., 51519 Odenthal (DE); Metzlaff, Michael, 3080 Tervuren (BE); de Block, Marc, 9820 Merelbeke (BE)

(57) **Abstract**

The present invention relates to methods for increasing the stress tolerance in plants and plant cells whereby neonicotinoid compounds, such as but not limited to imidacloprid, clothianidin, thiamethoxam, dinotefuran, nitenpyram, acetamiprid or thiacloprid, are applied to plants, or cells thereof, which comprise a genome that has been modified to make the plants or their cells more stress tolerant i.e. plants engineered to be stress tolerant. Particularly effective stress tolerance synergists in combination with genetically modified stress tolerant plants or their cells are neonicotinoid compounds which comprise a chloropyridine side chain, like e.g. imidacloprid, thiacloprid, acetamiprid, nitenpyram and 6-chloronicotinic acid (6-CNA).

## Description

Methods are provided for increasing the stress tolerance in plants and plant cells whereby neonicotinoid compounds such as but not limited to imidacloprid, clothianidin, thiamethoxam, dinotefuran, nitenpyram, acetamiprid or thiacloprid, are applied to plants, or cells thereof, which comprise a genome that has been modified to make the plants or their cells more stress tolerant i.e. plants engineered to be stress tolerant. Particularly effective stress tolerance synergists in combination with genetically modified stress tolerant plants or their cells are neonicotinoid compounds which comprise a chloropyridine side chain, like e.g. imidacloprid, thiacloprid, acetamiprid, nitenpyram and 6-chloronicotinic acid (6-CNA).

### Background art

Plants engineered to be stress tolerant are known in the art. Stress tolerance in plant cells and plants can e.g. be achieved by reducing the activity or the level of the endogenous poly-ADP-ribose polymerases (ParP) or poly(ADP-ribose) glycohydrolases (ParG) as described in WO 00/04173 A1 and PCT/EP2004/003995, respectively. It is thought that in this way, fatal NAD and ATP depletion in plant cells subject to stress conditions, resulting in traumatic cell death, can be avoided or sufficiently postponed for the stressed cells to survive and acclimate to the stress conditions.

European patent application No. 04077624.7 describes that stress tolerance in plants and plant cells is achieved by using nucleotide sequences encoding enzymes involved in the NAD salvage synthesis pathway and/or the NAD *de novo* synthesis pathway e.g. for overexpression in plants.

The application of compounds of the class of neonicotinoids on plants for purposes other than insect control is also known from the art (WO 01/26468 A2, WO 03/096811 A1).

WO 01/26468 A2 discloses a method of improving the growth of plants comprising applying to the plants or the locus thereof at least one compound selected from the class of the neonicotinoids.

WO03/096811 A1 describes that the yield and/or the vigor of an agronomic plant can be increased or improved in locations where the level of insect infestation below that indicating the need for the use of an insecticide for insect control purposes by treating a seed of the plant with a neonicotinoid compound. The method is deemed useful for non-transgenic plants and for plants having a foreign gene that encodes for the production of a modified *Bacillus thuringiensis* delta-endotoxin protein.

However, the art remains silent on the possibility to increase the health and vigor of stress tolerant plants such as described in the prior art, and, in addition, further increase the stress tolerance of plants already engineered to be stress tolerant by application of chemical compounds.

### Summary of the invention

Briefly therefore, the present invention is directed to a novel method of increasing the stress tolerance of plants and plant cells which are engineered to be stress tolerant, comprising treating the plant and/or the habitat of said plants, the plant cells or the seeds from which such plants are grown with a neonicotinoid compound.

The present invention is also directed to a novel method of increasing the health and vigor of plants and plant cells which are engineered to be stress tolerant, comprising treating the plant and/or the habitat of said plants, the plant cells or the seeds from which such plants are grown with a neonicotinoid compound.

The present invention is also directed to a novel seed from which stress-tolerant plants are grown from and that is treated with a neonicotinoid compound.

### Detailed description

As used herein, "plants engineered to be stress tolerant" or "plant cells engineered to be stress tolerant", refers to plants or cells and seed thereof, which contain foreign DNA comprising an exogenous stress tolerance enhancing gene or a variant of an endogenous gene corresponding to such a exogenous stress tolerance enhancing gene, which variant results in higher stress tolerance of the plant cells or plants harbouring such variant.

In accordance with the present invention, it has been discovered that the stress tolerance, health and vigor of a plant which is engineered to be stress tolerant can be increased by treating the plants or the seed of the plant and/or the habitat of said plants with an effective amount of a neonicotinoid compound. Surprisingly, such neonicotinod compounds have the capability of causing an increase in the stress tolerance and health of plants which are already more stress tolerant than the respective wild-type plants. This effect even exceeds the effect which could be expected from merely relying on the added effects of the growth enhancing properties of neonicotinoids when applied on plants, such as described in WO 01/26468 A2 and of the effects derived from the engineered stress tolerance of a given plant. The effect is independent of the presence of insects which are the targets of the above-mentioned neonicotinoids. Accordingly, the effect is connected with the biochemical improvement of the stress-tolerance of a plant or plant cell or the seed from which it is grown. It has been discovered that this effect enhances the genetically engineered stress tolerance of such engineered plants and plant cells.

As used herein, "stress tolerance" refers to a better tolerance to stress, compared to the non-engineered plant, when stress is applied to a plant e.g. by the application of chemical compounds (e.g. herbicides, fungicides, insecticides, plant growth regulators, adjuvants, fertilizers), exposure to abiotic stress (e.g. drought, high light conditions, extreme temperatures, ozone and other atmospheric pollutants, soil salinity or heavy metals) or biotic stress (e.g. pathogen or pest infection including infection by fungi, viruses, bacteria, insects, nematodes, mycoplasms and mycoplasma like organisms etc.).

In one embodiment of the invention, a method is described which is useful to increase the stress tolerance and health of a plant or plant cell or seed from which such plant is grown and which is engineered to be stress tolerant, comprising applying to said plant and/or its habitat, to a plant cell or to seed from which said plants are grown an effective amount of a neonicotinoid compound of the formula (I) 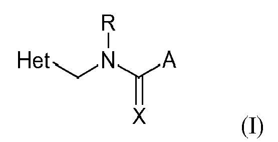 wherein
- Het: represents a heterocycle which is in each case optionally mono- or polysubstituted by fluorine, chlorine, methyl or ethyl, which heterocycle is selected from the following group of heterocycles: pyrid-3-yl, pyrid-5-yl, 3-pyridinio, 1-oxido-5-pyridinio, 1-oxido-5-pyridinio, tetrahydrofuran-3-yl, thiazol-5-yl,
- A: represents C₁-C₆-alkyl, -N(R¹)(R²) or S(R²), in which
R¹ represents hydrogen, C₁-C₆-alkyl, phenyl-C₁-C₄-alkyl, C₃-C₆-cycloalkyl, C₂-C₆-alkenyl or C₂-C₆-alkynyl, and R² represents C₁-C₆-alkyl, C₂-C₆-alkenyl, C₂-C₆-alkynyl, -C(=O)-CH₃ or benzyl,
- R: represents hydrogen, C₁-C₆-alkyl, C₂-C₆-alkenyl, C₂-C₆-alkynyl, -C(=O)-CH₃ or benzyl or together with R² represents the groups below: -CH₂-CH₂-, -CH₂-CH₂-CH₂-, -CH₂-O-CH₂-, -CH₂-S-CH₂-, -CH₂-NH-CH₂-, -CH₂-N(CH₃)-CH₂-, and
- X: represents N-NO₂, N-CN or CH-N0₂.

Saturated or unsaturated hydrocarbon radicals, such as alkyl or alkenyl, can in each case be straight-chain or branched as far as this is possible, including in combination with heteroatoms, such as, for example, in alkoxy.

These compounds are known to have insecticidal activity (see, for example, EP-Al-192 606, EP-A2-580 533, EP-A2-376 279, EP-A2-235 725).

Preferred compounds of the formula (I) which may be mentioned are the neonicotinoids listed in "The Pesticide Manual", 13th Edition, 2003 (British Crop Protection Council).

A very particularly preferred compound is imidacloprid of the formula 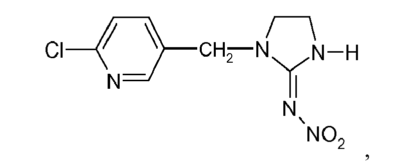 known, for example, from EP A1 0 192 060.

A further very particularly preferred compound is acetamiprid of the formula 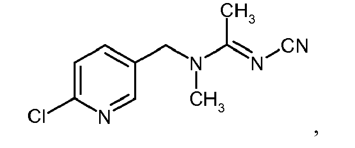 known, for example, from WO A1 91/04965.

A further very particularly preferred compound is thiacloprid of the formula 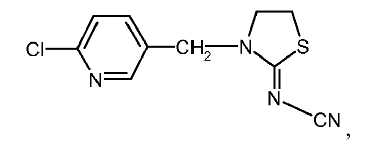 known, for example, from EP A2 0 235 725.

A further very particularly preferred compound is nitenpyram of the formula 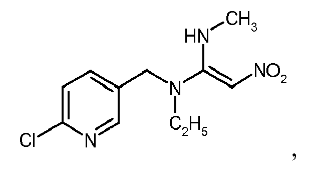 known, for example, from EP A2 0 302 389.

A further preferred compound is clothianidin of the formula 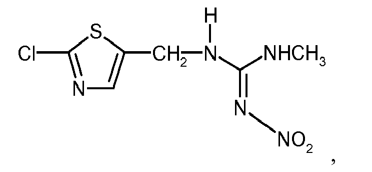 know, for example, from EP A2 0 376 279.

A further preferred compound is thiamethoxam of the formula 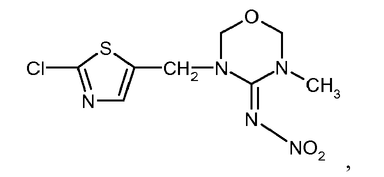 known, for example, from EP A2 0 580 553.

A further preferred compound is dinotefuran of the formula 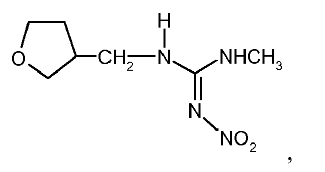 known, for example, from EP A1 0 649 845.

Imidacloprid is an especially preferred compound for the use in methods according to the invention. Clothianidin should also be mentioned as a preferred compound in the context of the present invention.

In another embodiment of the invention, a method is described which is useful to increase the stress tolerance and health of a plant or plant cell or seed from which such plant is grown and which is engineered to be stress tolerant, comprising applying to said plant and/or its habitat, to a plant cell or to seed from which said plants are grown an effective amount of 6-chloronicotinic acid (niacin, CAS NO: 5326-23-8) of the formula

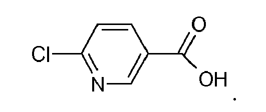

6-Chloronicotinic acid can be set free during the degradation of the above mentioned neonicotinoids which carry this group, such as imidacloprid, thiacloprid, acetamiprid, nitenpyram. For example, imidacloprid is degraded stepwise to the primary metabolite 6-chloronicotinic acid, which eventually breaks down into carbon dioxide. It was discovered that this metabolite also increases the stress tolerance and health of a plant or plant cell or seed from which such plant is grown and which has been engineered to be stress tolerant.

The compounds mentioned above cause an increase of stress tolerance of plants or cells and seed thereof, which contain foreign DNA comprising an exogenous stress tolerance enhancing gene or a variant of an endogenous gene corresponding to such an exogenous stress tolerance enhancing gene, which variant results in higher stress tolerance of the plant cells or plants harbouring such variant.

As a rule, an increase in stress tolerance means at least a significant reduction of a stress indicating parameter, which can be measured either as a morphological, physiological or biochemical difference in a comparison of stressed untreated, non-transgenic reference plants or cells and seed thereof versus treated, transgenic reference plants or cells and seed thereof. "Health" as it is mentioned herein, refers to a significant lower infestation level of plants, cells and seed thereof with pests and diseases , which e.g. can be counted or estimated as a number of individual pest species present or as macroscopical symptoms expression (e.g. relative relative leaf area reduction, leaf area infestation, leaf area necrosis). Significance is proven with the Colby formula. Moreover, resistance to stress conditions can also be measured by measuring NAD(H) levels (which remain higher in stressed, tolerant plants than in stressed control plants) and reactive oygen species level (lower in stressed, tolerant plants than in stressed control plants) under stress conditions as described in European patent application EP04077624.7 (incorporated herein by reference)

One of the advantages of the present invention is that the particular systemic properties of the compounds according to the invention and compositions comprising said compounds mean that treatment of the seed of plants which have been engineered to be stress tolerant with these compositions increases the stress tolerance of the germinating plant and the resulting plant after emergence. In this manner, the immediate treatment of the crop at the time of sowing or shortly thereafter can be dispensed with.

In another embodiment of the invention, a method is described which is useful to increase the stress tolerance and health of a plant or plant cell or seed from which such plant is grown and which is engineered to be stress tolerant, comprising applying to said plant and/or its habitat, to a plant cell or to seed from which said plants are grown an effective amount of a composition comprising the compounds of the formula (I).

Accordingly, the invention also relates to compositions comprising the compounds of the formula (I) for the use of such compositions according to the invention.

The compounds of formula (I) can be used also in a mixture with other active compounds, for example, insecticides, bactericides, miticides, fungicides, etc. in the form of their commercially useful formulations or in the application forms prepared from such formulations. This can be done to obtain compositions which in addition to improving the stress tolerance and health of the plants according to the invention also combat pests which may be present. Insecticides which can be used are, for example, organophosphorous agents, carbamate agents, carboxylate type chemicals, chlorinated hydrocarbon type chemicals, insecticidal substances produced by microbes, etc.

In many cases, this results in synergistic effects, i.e. the activity of the mixture exceeds the activity of the individual components. Such formulations and application forms are commercially and ecologically especially useful as generally lower amounts of active ingredients can be used. A synergist, however, must not necessarily be active itself, as long as it enhances the action of the active compound.

A mixture with other known active compounds, such as herbicides, or with safeners, fertilizers and growth regulators is also possible.

Treatment according to the invention of the plants and plant parts with the active compounds is carried out directly or by allowing the compounds to act on their surroundings, environment or storage space by the customary treatment methods, for example by immersion, spraying, evaporation, fogging, scattering, painting on and, in the case of propagation material, in particular in the case of seed, also by applying one or more coats.

The active compounds can be converted into the customary formulations, such as solutions, emulsions, wettable powders, suspensions, powders, dusts, pastes, soluble powders, granules, suspension-emulsion concentrates, natural and synthetic materials impregnated with active compound, and microencapsulations in polymeric substances.

The content of the active compounds of the present invention in a commercially useful formulation or application form can be varied in a wide range. The active-compound content of the use forms prepared from the commercial formulations can vary within wide limits.

These formulations are produced in a known manner, for example by mixing the active compounds with extenders, that is liquid solvents and/or solid carriers, optionally with the use of surfactants, that is emulsifiers and/or dispersants, and/or foam-formers.

If the extender used is water, it is also possible to employ for example organic solvents as auxiliary solvents. Essentially, suitable liquid solvents are: aromatics such as xylene, toluene or alkylnaphthalenes, chlorinated aromatics or chlorinated aliphatic hydrocarbons such as chlorobenzenes, chloroethylenes or methylene chloride, aliphatic hydrocarbons such as cyclohexane or paraffins, for example petroleum fractions, mineral and vegetable oils, alcohols such as butanol or glycol and also their ethers and esters, ketones such as acetone, methyl ethyl ketone, methyl isobutyl ketone or cyclohexanone, strongly polar solvents such as dimethylformamide and dimethyl sulphoxide, and also water.

As solid carriers there are suitable: for example ammonium salts and ground natural minerals such as kaolins, clays, talc, chalk, quartz, attapulgite, montmorillonite or diatomaceous earth, and ground synthetic minerals, such as highly disperse silica, alumina and silicates; as solid carriers for granules there are suitable: for example crushed and fractionated natural rocks such as calcite, marble, pumice, sepiolite and dolomite, and also synthetic granules of inorganic and organic meals, and granules of organic material such as sawdust, coconut shells, maize cobs and tobacco stalks; as emulsifiers and/or foam-formers there are suitable: for example nonionic and anionic emulsifiers, such as polyoxyethylene fatty acid esters, polyoxyethylene fatty alcohol ethers, for example alkylaryl polyglycol ethers, alkylsulphonates, alkyl sulphates, arylsulphonates and also protein hydrolysates; as dispersants there are suitable: for example lignin-sulphite waste liquors and methylcellulose.

Tackifiers such as carboxymethylcellulose and natural and synthetic polymers in the form of powders, granules or latices, such as gum arabic, polyvinyl alcohol and polyvinyl acetate, as well as natural phospholipids such as cephalins and lecithins, and synthetic phospholipids, can be used in the formulations. Other additives can be mineral and vegetable oils.

It is possible to use colorants such as inorganic pigments, for example iron oxide, titanium oxide and Prussian Blue, and organic dyes, such as alizarin dyes, azo dyes and metal phthalocyanine dyes, and trace nutrients such as salts of iron, manganese, boron, copper, cobalt, molybdenum and zinc.

The formulations generally comprise between 0.1 and 98% by weight of active compound, preferably between 0.1 and 90% and particularly preferably between 0.5 and 70% by weight of active compound.

The advantageous stress tolerance enhancing effect of the neonicotinoid compounds and 6-CNA is particularly strongly pronounced at certain application rates. However, the application rates of the active compounds can be varied within relatively wide ranges. In general, the rates of applications are from 1 g to 1600 g of the active compound per hectare, preferably from 10 g to 800 g of the active compound per hectare, and particularly preferably from 10 g to 600 g of the active compound per hectare

As mentioned before, one embodiment of the invention is a method which is useful to increase the stress tolerance and health of a plant which is engineered to be stress tolerant, comprising applying to the plant propagation material including seed from which said plant is grown an effective amount of a composition comprising the compounds of the formula (I). The plant propagation material may be treated before planting, for example seed may be dressed before sowing. The compounds according to the invention may also be applied to seed grains either by impregnating the grains with a liquid formulation or by coating them with a solid formulation.. The composition may also be applied to the planting site when the propagation material is being planted, e.g. during sowing.

Accordingly, the invention also relates to seed of a plant which is engineered to be stress tolerant and which has been treated with a compound according to the invention.

In connection with the treatment of plant propagation material such as seeds, favourable rates of application are in general 0,1 to 1000g, in particular 1 to 800g, preferably 10 to 500 g of one of the neonicotinoid compounds or 6-CNA per 100 kg of material to be treated.

Crops which can be improved according to the present method include any plant engineered to be stress resistant, both dicotyledonous and monocotyledonous seeds, plant cells especially cotton, canola, oilseed rape, wheat, corn or maize, barley, rice, oats, rye, buckwheat, triticale, sugarcane, soybean, sunflowers, alfalfa, bean, flax, mustard, pea, tobacco, potato, sweet potato, sugarbeet, turfgrass, sorghum, millet, vegetable brassicas, other vegetables (including artichoke, asparagus, carrot, celery, chicory, cucumbers, eggplants, leek, lettuce, melons, okra, onion, pepper, pumpkin, radish, rutabaga, safflower, spinach, squash, tomato, watermelons, yam, zucchini), almond, apple, apricot, banana, blackberry, blueberry, cacao, citrus (including grapefruit, lemon, orange, kumquat, lime, mandarin, tangerine, pummelo and Satsuma mandarin), cherry, coconut, cranberry, date, gooseberry, grape, guava, kiwi, mango, nectarine, papaya, passion fruit, peach, peanut, pear, pineapple, pecan, pistachio, plum, raspberry, strawberry, teaplant, walnut but also plants used in horticulture, floriculture or forestry.

All plants and plant parts can be treated in accordance with the invention. Plant parts are to be understood to mean all above-ground and underground parts and organs of plants, such as shoot, leaf, flower and root, examples which may be mentioned being leaves, needles, stalks, stems, flowers, fruit bodies, fruits, seeds, roots, tubers and rhizomes. The plant parts also include harvested material, and vegetative and generative propagation material, for example cuttings, tubers, rhizomes, offsets and seeds. They also include plant cells, such as may be used or result from the transformation of a plant cell in accordance with the invention. It is also possible to apply the aforementioned compounds onto or into the soil, e.g. before planting or sowing to achieve the effect described, e.g. to enhance the stress tolerance of the plants after planting and the emerging plant which grows from a seed which has been sown into treated soil.

The plants, plant cells and seed referred to in this invention are engineered to increase the stress tolerance of said plants in a specific way.

In one embodiment of the invention, an exogenous stress tolerance enhancing gene is capable of reducing the expression and/or the activity of poly(ADP-ribose)polymerase (PARP) gene in the plant cells or plants as described in WO 00/04173 A1 or EP 04077984.5 (herein incorporated by reference).

Poly(ADP-ribose) polymerase (PARP), also known as poly(ADP-ribose) transferase (ADPRT) (EC 2.4.2.30), is a nuclear enzyme found in most eukaryotes, including vertebrates, arthropods, molluscs, slime moulds, dinoflagellates, fungi and other low eukaryotes with the exception of yeast. The enzymatic activity has also been demonstrated in a number of plants (Payne *et al.,* 1976; Willmitzer and Wagner, 1982; Chen *et al.,* 1994; O'Farrell, 1995).

PARP catalyzes the transfer of an ADP-ribose moiety derived from NAD⁺, mainly to the carboxyl group of a glutamic acid residue in the target protein, and subsequent ADP-ribose polymerization. The major target protein is PARP itself, but also histones, high mobility group chromosomal proteins, topoisomerase, endonucleases and DNA polymerases have been shown to be subject to this modification.

As a particular embodiment, the stress tolerance enhancing gene may comprise the following operably linked DNA fragments:
a) a plant-expressible promoter;
b) a DNA region which when transcribed results in an RNA molecule capable of reducing the expression of the endogenous PARP encoding genes of a plant (a PARP inhibitory RNA molecule);
c) a DNA region involved in transcription termination and polyadenylation.

The mentioned DNA region may result in a so-called antisense RNA molecule reducing in a transcriptional or post-transcriptional manner the expression of a PARP encoding gene in the target plant or plant cell, comprising at least 20 or 21 consecutive nucleotides having at least 95% to 100% sequence identity to the complement of the nucleotide sequence of a PARP encoding gene present in the plant cell or plant.

The mentioned DNA region may also result in a so-called sense RNA molecule comprising reducing in a transcriptional or post-transcriptional manner the expression of a PARP encoding gene in the target plant or plant cell, comprising at least 20 or 21 consecutive nucleotides having at least 95% to 100% sequence identity to the nucleotide sequence of a PARP encoding gene present in the plant cell or plant.

However, the minimum nucleotide sequence of the antisense or sense RNA region of about 20 nt of the PARP coding region may be comprised within a larger RNA molecule, varying in size from 20 nt to a length equal to the size of the target gene. The mentioned antisense or sense nucleotide regions may thus be about from about 21 nt to about 5000 nt long, such as 21 nt, 40 nt, 50 nt, 100 nt, 200 nt, 300 nt, 500 nt, 1000 nt, 2000 nt or even about 5000 nt or larger in length. Moreover, it is not required for the purpose of the invention that the nucleotide sequence of the used inhibitory PARP RNA molecule or the encoding region of the exogenous gene, is completely identical or complementary to the endogenous PARP gene the expression of which is targeted to be reduced in the plant cell. The longer the sequence, the less stringent the requirement for the overall sequence identity is. Thus, the sense or antisense regions may have an overall sequence identity of about 40 % or 50 % or 60 % or 70 % or 80 % or 90 % or 100 % to the nucleotide sequence of the endogenous PARP gene or the complement thereof. However, as mentioned antisense or sense regions should comprise a nucleotide sequence of 20 consecutive nucleotides having about 100 % sequence identity to the nucleotide sequence of the endogenous PARP gene. Preferably the stretch of about 100% sequence identity should be about 50, 75 or 100 nt.

For the purpose of this invention, the "sequence identity" of two related nucleotide sequences, expressed as a percentage, refers to the number of positions in the two optimally aligned sequences which have identical residues (x100) divided by the number of positions compared. A gap, i.e. a position in an alignment where a residue is present in one sequence but not in the other is regarded as a position with non-identical residues. The alignment of the two sequences is performed by the Needleman and Wunsch algorithm (Needleman and Wunsch 1970) Computer-assisted sequence alignment, can be conveniently performed using standard software program such as GAP which is part of the Wisconsin Package Version 10.1 (Genetics Computer Group, Madison, Wisconsin, USA) using the default scoring matrix with a gap creation penalty of 50 and a gap extension penalty of 3.

It will be clear that whenever nucleotide sequences of RNA molecules are defined by reference to nucleotide sequence of corresponding DNA molecules, the thymine (T) in the nucleotide sequence should be replaced by uracil (U). Whether reference is made to RNA or DNA molecules will be clear from the context of the application.

The efficiency of the above mentioned exogenous genes in reducing the expression of the endogenous PARP gene may be further enhanced by inclusion of DNA elements which result in the expression of aberrant, unpolyadenylated PARP inhibitory RNA molecules. One such DNA element suitable for that purpose is a DNA region encoding a self-splicing ribozyme, as described in WO 00/01133 A1.

The efficiency of the above mentioned exogenous genes in reducing the expression of the endogenous PARP gene of a plant cell may also be further enhanced by including into one plant cell simultaneously a exogenous gene as herein described encoding a antisense PARP inhibitory RNA molecule and a exogenous gene as herein described encoding a sense PARP inhibitory RNA molecule, wherein said antisense and sense PARP inhibitory RNA molecules are capable of forming a double stranded RNA region by base pairing between the mentioned at least 20 consecutive nucleotides, as described in WO 99/53050 A1.

As further described in WO 99/53050 A1, the sense and antisense PARP inhibitory RNA regions, capable of forming a double stranded RNA region may be present in one RNA molecule, preferably separated by a spacer region. The spacer region may comprise an intron sequence. Such an exogenous gene may be conveniently constructed by operably linking a DNA fragment comprising at least 20 nucleotides from the isolated or identified endogenous PARP gene, the expression of which is targeted to be reduced, in an inverted repeat, to a plant expressible promoter and 3'end formation region involved in transcription termination and polyadenylation. To achieve the construction of such an exogenous gene, use can be made of the vectors described in WO 02/059294 A1.

Current nomenclature refers to the classical Zn-finger-containing polymerases as PARP1 proteins (and corresponding parp1 genes) whereas the structurally non-classical PARP proteins are currently referred to as PARP2 (and corresponding parp2 genes) and PARP encoding genes as used herein, may refer to either type.

The following database entries (herein incorporated by reference) identifying experimentally demonstrated and putative poly ADP-ribose polymerase protein sequences, parts thereof or homologous sequences, could be used according to the current invention: BAD53855 (*Oryza sativa*); BAD52929 (*Oryza sativa*); XP_477671 (*Oryza sativa*); BAC84104 (*Oryza sativa*); AAT25850 (*Zea mays*); AAT25849 (*Zea mays*); NP_197639 (*Arabidopsis thaliana*); NP_850165 (*Arabidopsis thaliana*); NP_188107 (*Arabidopsis thaliana*); NP_850586 (*Arabidopsis thaliana*); BAB09119 (*Arabidopsis thaliana*); AAD20677 (*Arabidopsis thaliana*); Q11207 (*Arabidopsis thaliana*); C84719 (*Arabidopsis thaliana*); T51353 (*Arabidopsis thaliana*); T01311 (*Arabidopsis thaliana*); AAN12901 (*Arabidopsis thaliana*); AAM13882 (*Arabidopsis thaliana*); CAB80732 (*Arabidopsis thaliana*); CAA10482 (*Arabidopsis thaliana*); AAC79704 (*Zea mays*): AAC19283 (*Arabidopsis thaliana*); CAA10888 (*Zea mays*); CAA10889 (*Zea mays*); CAA88288 (*Arabidopsis thaliana).*

As a particular embodiment of the invention, the PARP gene expression reducing gene may comprise the following operably linked DNA fragments:
a) a plant expressible promoter
b) a DNA region which when transcribed yields an RNA molecule, the RNA molecule comprising:
   a. An antisense nucleotide sequence comprising at least about 20 consecutive nucleotides having about 96% sequence identity to a nucleotide sequence of about 20 consecutive nucleotides selected from the nucleotide sequences of SEQ ID 1 (Arabidopsis parp1 coding region) SEQ ID 2 (Arabidopsis parp 2 coding region) SEQ ID 3 (*Zea mays* parp1 coding region), SEQ ID 4 (another *Zea mays* parp1 coding region), SEQ ID 5 (*Zea mays* parp2 coding region) or SEQ ID 6 (cotton parp2 partial cDNA) or from nucleotide sequences encoding proteins with similar or identical amino acid sequences as encoded by the mentioned nucleotide sequences.
   b. A sense nucleotide sequence comprising at least about 20 nucleotides which are complementary to the antisense nucleotide sequence. The sense nucleotide sequence may thus comprise a sequence of at least about 20 consecutive nucleotides having about 96% sequence identity to a nucleotide sequence of about 20 consecutive nucleotides selected from the nucleotide sequences of SEQ ID 1 (Arabidopsis parp1 coding region) SEQ ID 2 (Arabidopsis parp 2 coding region) SEQ ID 3 (Zea mays parp1 coding region), SEQ ID 4 (another Zea mays parp1 coding region), SEQ ID 5 (Zea mays parp2 coding region) or SEQ ID 6 (cotton parp2 partial cDNA) of from from nucleotide sequences encoding proteins with similar or identical amino acid sequences as encoded by the mentioned nucleotide sequences;
      whereby the sense and antisense nucleotide sequence are capable of forming a double stranded RNA molecule (dsRNA);
   c) A DNA region for transcription termination and polyadenylation.

However, it will be clear that other PARP encoding genes as described in WO100/04173 or EP 04077984.5 may be used.

It will also be clear that the goal of the current invention to increase stress tolerance may also be achieved by applying the mentioned chemical compounds on plants or plant cells which comprise in their genome a variant PARP encoding gene whereby the PARP expression and/or activity is reduced when compared with PARP expression and/or activity in a similar plant, which would also result in increased stress tolerance of the plant with the variant PARP. Such variant PARP encoding genes may be induced, e.g. by mutagenesis or it may be naturally occurring alleles of PARP encoding genes, which are correlated with increased stress tolerance of the harboring plants.

In another embodiment of the invention, the mentioned compounds are applied on plants or plant cells comprising an exogenous stress tolerance enhancing gene capable of reducing the expression and/or the activity of the ParG encoding genes of the plants or plants cells, as described e.g. in WO 2004/090140 (herein incorporated by reference).

PARG (poly (ADP-ribose) glycohydrolase; E.C.3.2.1.143) converts poly (ADP-ribose) polymers to free ADP-ribose by its exoglycosidase and endoglycosidase activity (PARG).

In plants, a poly(ADP-ribose) glycohydrolase has been identified by map-based cloning of the wild-type gene inactivated in a mutant affected in clock-controlled transcription of genes in Arabidopsis and in photoperiod dependent transition from vegetative growth to flowering (tej). The nucleotide sequence of the gene can be obtained from nucleotide databases under the accession number AF394690 (Panda et al., 2002 Dev. Cell. 3, 51-61; SEQ ID No 7)

Nucleotide sequences of other plant PARG encoding genes from plants can be found in WO 2004/090140 A2, such as the PARG gene from *Solanum tuberosum* (SEQ ID No 8); *Oryza sativa* (SEQ ID No 9) or *Zea mays* (SEQ ID No 10) as well as methods to isolate additional PARG encoding genes and variants thereof from other plants.

Thus, in one embodiment, the plants or plant cells engineered to be stress resistant may comprise the following operably linked DNA fragments:
a) a plant expressible promoter
b) a DNA region, which when transcribed yields an inhibitory RNA molecule, the RNA molecule comprising
   i. a antisense nucleotide region comprising at least 20 consecutive nucleotides having at least 96% sequence identity to a nucleotide sequence of about 20 nucleotides selected from the complement of a nucleotide sequence encoding a plant PARG protein, such as the nucleotide sequences of SEQ ID 7, SEQ ID 8, SEQ ID 9 or SEQ ID 10 or nucleotide sequences encoding proteins with similar or identical amino acid sequences as the nucleotide sequences mentioned; or
   ii. a sense nucleotide region comprising at least 20 consecutive nucleotides selected from a nucleotide sequence encoding a plant PARG protein, such as the nucleotide sequences of SEQ ID 7, SEQ ID 8, SEQ ID 9 or SEQ ID 10 or nucleotide sequences encoding proteins with similar or identical amino acid sequences as the nucleotide sequences mentioned; or
   iii. a antisense and sense nucleotide sequences as mentioned sub i) or ii) whereby said antisense and sense nucleotide sequence are capable of forming a double stranded RNA molecule;
c) A DNA region involved in transcription termination and polyadenylation.

It will be immediately clear to the skilled artisan that additional parameters of length of sense and antisense nucleotide sequences or dsRNA molecules, and sequence identity for the ParG inhibitory RNA molecules can be used as mentioned above for the PARP inhibitory RNA molecules.

In yet another embodiment of the invention, the exogenous stress tolerance enhancing gene may comprise the following operably linked DNA molecules:
a) a plant-expressible promoter;
b) a DNA region coding for a plant-functional enzyme of the nicotinamide adenine dinucleotide salvage synthesis pathway selected from nicotinamidase, nicotinate phosphoribosyltransferase, nicotinic acid mononucleotide adenyl transferase or nicotinamide adenine dinucleotide synthetase; and
c) a 3'end region involved in transcription termination and polyadenylation,
as described in EP 04077624.7 (herein incorporated by reference).

As used herein, "a plant-functional enzyme of the nicotinamide adenine dinucleotide salvage synthesis pathway" is an enzyme which when introduced into plants, linked to appropriate control elements such as plant expressible promoter and terminator region, can be transcribed and translated to yield a enzyme of the NAD salvage synthesis pathway functional in plant cells. Included are the enzymes (and encoding genes) from the NAD salvage synthesis, which are obtained from a plant source, but also the enzymes obtained from yeast (Saccharomyces cereviseae) or from other yeasts or fungi. It is thought that the latter proteins may be even more suitable for the methods according to the invention, since these are less likely to be subject to the enzymatic feedback regulation etc. to which similar plant-derived enzymes may be subject.

Enzymes involved in the NAD salvage synthesis pathway comprise the following
- Nicotinamidase (EC 3.5.1.19) catalyzing the hydrolysis of the amide group of nicotinamide, thereby releasing nicotinate and NH3. The enzyme is also known as nicotinamide deaminase, nicotinamide amidase, YNDase or nicotinamide amidohydrolase
- Nicotinate phophoribosyltransferase (EC 2.4.2.11) also known as niacin ribonucleotidase, nicotinic acid mononucleotide glycohydrolase; nicotinic acid mononucleotide pyrophosphorylase; nicotinic acid phosphoribosyltransferase catalyzing the following reaction

   Nicotinate-D-ribonucleotide+diphosphate=nicotinate+5-phospho-α-D ribose 1-diphosphate
- Nicotinate-nucleotide adenylyltransferase, (EC 2.7.7.18) also known as deamido-NAD+ pyrophosphorylase; nicotinate mononucleotide adenylyltransferase; deamindonicotinamide adenine dinucleotide pyrophsophorylase; NaMT-ATase; nicotinic acid mononucleotide adenylyltransferase catalyzing the following reaction

   ATP+nicotinate ribonucleotide=diphosphate+deamido-NAD⁺
- NAD-synthase (EC 6.3.1.5) also known as NAD synthetase; NAD⁺synthase; nicotinamide adenine dinucleotide synthetase; diphosphopyridine nucleotide synthetase, catalyzing the following reaction

   Deamido-NAD⁺+ATP+NH3=AMP+diphosphate+NAD⁺

In one embodiment of the invention, the DNA regions coding for a plant functional enzyme of the NAD salvage pathway may comprise a nucleotide sequence from SEQ ID Nos 11, 12, 13, 14 or 15 or a nucleotide sequence encoding a protein with similar or identical amino acid sequences as the proteins encoded by the above mentioned nucleotide sequences.

As described by Hunt et al., 2004 plant homologues of these enzymes have been identified and these DNA sequences may be used to similar effect(Hunt et al. , 2004, New Phytologist163(1): 31-44). The identified DNA sequences have the following Accession numbers: for nicotinamidase: At5g23220 (SEQ ID No 16); At5g23230 (SEQ ID No 17) and At3g16190 (SEQ ID No 18); for nicotinate phosphoribosyltransferase: At4g36940 (SEQ ID No 19), At2g23420 (SEQ ID No 20), for nicotinic acid mononucleotide adenyltransferase: At5g55810 (SEQ ID No 21) and for NAD synthetase: Atlg55090 (SEQ ID No 22).

However, it will be clear that the plants engineered to be stress resistant may also comprise variants of these nucleotide sequences, including insertions, deletions and substitutions thereof. Equally, homologues to the mentioned nucleotide sequences from species different from *Saccharomyces cerevisea* can be used. These include but are not limited to nucleotide sequences from plants, and nucleotide sequences encoding proteins with the same amino acid sequences, as well as variants of such nucleotide sequences.

Variants of the described nucleotide sequence will have a sequence identity which is preferably at least about 80%, or 85 or 90% or 95% with identified nucleotide sequences encoding enzymes from the NAD salvage pathway, such as the ones identified in the sequence listing. Preferably, these variants will encode functional proteins with the same enzymatic activity as the enzymes from the NAD salvage pathway.

The methods of the invention can be used to increase the tolerance of plants or plant cells to different kinds of stress-inducing conditions, particularly abiotic stress conditions including submergence, high light conditions, high UV radiation levels, increased hydrogen peroxide levels, drought conditions, high or low temperatures, increased salinity conditions, application of herbicides, pesticides, insecticides etc. The methods of the invention can also be used to reduce the level of reactive oxygen species (ROS) or to increase the level of NAD+, NADH+ or ATP in the cells of plants growing under adverse conditions, particularly abiotic stress conditions including submergence, high light conditions, high UV radiation levels, increased hydrogen peroxide levels, drought conditions, high or low temperatures, increased salinity conditions etc. The level of ROS or the level of NADH can be determined using the methods known in the art, including those described in the Examples. Increased stress tolerance of plants, can also be analyzed using the methods to determine the mitochondrial electron flow as described in WO97/06267 or WO02/066972.

Although not intending to limit the invention to a particular mode of action, it is expected that metabolites of the neonicotinoids, particularly of neonicotinoid compounds which comprise a chloropyridine side chain, feed into the NAD salvage pathway and result in higher yields of NAD levels. In this light, it was not expected that application of such compounds on plants engineered to be stress resistant would have any effect, as NAD levels under stress conditions in such plant cells were already significantly higher than in plant cells not engineered to be stress resistant.

The method of the current invention to increase stress resistance by applying neonicotinoid compounds on plant or plant cells may be suitable for any plant engineered to be stress resistant, both dicotyledonous and monocotyledonous plant cells and plants including but not limited to cotton, Brassica vegetables, oilseed rape, wheat, corn or maize, barley, sunflowers, rice, oats, sugarcane, soybean, vegetables (including chicory, lettuce, tomato), tobacco, potato, sugarbeet, papaya, pineapple, mango, *Arabidopsis thaliana,* but also plants used in horticulture, floriculture or forestry, cereal plants including wheat, oat, barley, rye, rice, turfgrass, sorghum, millet or sugarcane plants. The methods of the invention can also be applied to any plant including but not limited to cotton, tobacco, canola, oilseed rape, soybean, vegetables, potatoes, Lemna spp., Nicotiana spp., sweet potatoes, Arabidopsis, alfalfa, barley, bean, corn, cotton, flax, pea, rape, rice, rye, safflower, sorghum, soybean, sunflower, tobacco, wheat, asparagus, beet, broccoli, cabbage, carrot, cauliflower, celery, cucumber, eggplant, lettuce, onion, oilseed rape, pepper, potato, pumpkin, radish, spinach, squash, tomato, zucchini, almond, apple, apricot, banana, blackberry, blueberry, cacao, cherry, coconut, cranberry, date, grape, grapefruit, guava, kiwi, lemon, lime, mango, melon, nectarine, orange, papaya, passion fruit, peach, peanut, pear, pineapple, pistachio, plum, raspberry, strawberry, tangerine, walnut and watermelon.

As used herein "comprising" is to be interpreted as specifying the presence of the stated features, integers, steps or components as referred to, but does not preclude the presence or addition of one or more features, integers, steps or components, or groups thereof. Thus, e.g., a nucleic acid or protein comprising a sequence of nucleotides or amino acids, may comprise more nucleotides or amino acids than the actually cited ones, i.e., be embedded in a larger nucleic acid or protein. An exogenous gene comprising a DNA region which is functionally or structurally defined, may comprise additional DNA regions etc.

Unless stated otherwise in the Examples, all recombinant DNA techniques are carried out according to standard protocols as described in Sambrook et al. (1989) Molecular Cloning: A Laboratory Manual, Second Edition, Cold Spring Harbor Laboratory Press, NY and in Volumes 1 and 2 of Ausubel et al. (1994) Current Protocols in Molecular Biology, Current Protocols, USA. Standard materials and methods for plant molecular work are described in Plant Molecular Biology Labfax (1993) by R.D.D. Croy, jointly published by BIOS Scientific Publications Ltd (UK) and Blackwell Scientific Publications, UK. Other references for standard molecular biology techniques include Sambrook and Russell (2001) Molecular Cloning: A Laboratory Manual, Third Edition, Cold Spring Harbor Laboratory Press, NY, Volumes I and II of Brown (1998) Molecular Biology LabFax, Second Edition, Academic Press (UK). Standard materials and methods for polymerase chain reactions can be found in Dieffenbach and Dveksler (1995) PCR Primer: A Laboratory Manual, Cold Spring Harbor Laboratory Press, and in McPherson at al. (2000) PCR - Basics: From Background to Bench, First Edition, Springer Verlag, Germany.

Throughout the description and Examples, reference is made to the following sequences:
SEQ ID No. 1 *parp*1 coding region from *Arabidopsis thaliana.*
SEQ ID No. 2: *parp*2 coding region from *Arabidopsis thaliana.*
SEQ ID No. 3 *parp*1 coding region 1 from *Zea mays.*
SEQ ID No. 4: *parp*1 coding region 2 from *Zea mays.*
SEQ ID No. 5: *parp*2 coding region from *Zea mays.*
SEQ ID No. 6: parp2 partial coding region from cotton.
SEQ ID No.7: *par*G coding region from *Arabidopsis thaliana.*
SEQ ID No. 8: *par*G coding region from *Solanum tuberosum.*
SEQ ID No. 9: *par*G coding region from *Oryza sativa.*
SEQ ID No. 10: *par*G coding region from *Zea mays.*
SEQ ID No. 11: nucleotide sequence of the nicotinamidase from *Saccharomyces cereviseae (PNC1).*
SEQ ID No. 12:. nucleotide sequence of the nicotinate phosphoribosyltransferase from *Saccharomyces cereviseae (NPT1)* (complement)
SEQ ID No. 13: nucleotide sequence of the nicotinic acid mononucleotide adenyl transferase 1 (NMA1) from *Saccharomyces cereviseae.*
SEQ ID No. 14: nucleotide sequence of the nicotinic acid mononucleotide adenyl transferase 2 (NMA2) from *Saccharomyces cereviseae.*
SEQ ID No. 15: nucleotide sequence of the NAD synthetase (QNS1) from *Saccharomyces cereviseae..*
SEQ ID No. 16: nucleotide sequence of the nicotinamidase from *Arabidopsis thaliana (isoform 1).*
SEQ ID No. 17:. nucleotide sequence of the nicotinamidase from *Arabidopsis thaliana (isoform 2)*
SEQ ID No. 18:. nucleotide sequence of the nicotinamidase from *Arabidopsis thaliana (isoform 3)*
SEQ ID No. 19: nucleotide sequence of the nicotinate phosphoribosyltransferase from *Arabidopsis thaliana (isoform 1).*
SEQ ID No. 20: nucleotide sequence of the nicotinate phosphoribosyltransferase from *Arabidopsis thaliana (isoform 2).*
SEQ ID No. 21: nucleotide sequence of the nicotinic acid mononucleotide adenyl transferase from *Arabidopsis thaliana.*
SEQ ID No. 22: nucleotide sequence of the NAD synthetase from *Arabidopsis thaliana.*

### EXAMPLES

### Example 1: Protocols for measurement of NADH content and superoxide content.

### Intracellular NAD(P)H quantification using a water-soluble tetrazolium salt

Reference: Jun Nakamura, Shoji Asakura, Susan D. Hester, Gilbert de Murcia, Keith W. Caldecott and James A. Swenberg (2003): Quantitation of intracellular NAD(P)H can monitor an imbalance of DNA single strand break repair in base excision repair deficient cells in real time. Nucleic Acids Research 31(17), e104.

### Plant material

Most plant material can be used, e.g. in vitro grown Arabidopsis shoots 14-18 days old but NOT flowering or hypocotyl explants of oilseed rape.

### Cell Counting Kit-8 (CCK-8)

Sopachem n.v./Belgium, 72A, Avenue du Laarbeeklaan, 1090 Brussels, Belgium

### Contents

5mL bottles containing 5mMol/L WST-8 (tetrazolium salt), 0.2mMol/L 1-Methoxy PMS, 150mMol/L NaCl;

*Reaction solution:* 10mL 25mM K-phosphate buffer pH7.4; 0.5mL CCK-8; 0.1mM I-Methoxy-5-methylphenazinium methyl sulfate (= 1-Methoxyphenazine methosulfate): 1µL/mL of 100mM stock (MW= 336.4; 100mg in 2.973mL water); 1 drop Tween20/25mL

### Procedure

Harvest plant material and put in 25mM K-phosphate buffer pH7.4 (e.g.: 150 oilseed rape hypocotyl explants or 1gr Arabidopsis shoots (without roots)). Replace buffer with reaction solution (15mL for 1gr Arabidopsis shoots or 15mL for 150 oilseed rape hypocotyl explants). Incubate at 26°C in the dark for about 1/2 hour (follow reaction). Measure the absorbance of the reaction solution at 450nm.

### Measuring superoxide production by quantifying the reduction of XTT

Reference: De Block, M., De Brouwer, D. (2002) A simple and robust in vitro assay to quantify the vigour of oilseed rape lines and hybrids. Plant Physiol. Biochem. 40, 845-852

### A. Brassica napus

### Media and reaction buffers

*Sowing medium (medium 201):* Half concentrated Murashige and Skoog salts; 2% sucrose, pH 5.8; 0.6% agar (Difco Bacto Agar); 250mg/l triacillin.

*Callus inducing medium A2S3:* MS medium, 0.5g/l Mes (pH 5.8), 3% sucrose, 40mg/l adenine-SO₄, 0.5% agarose, lmg/12,4-D, 0.25mg/l NAA, lmg/l BAP, 250mg/l triacillin.

Reaction buffer: 25mM K-phosphate buffer pH 8; 1mM sodium,3'-{1-[phenylamino-carbonyl]-3,4-tetrazolium}-bis(4-methoxy-6-nitro) = XTT (BioVectra, Canada) (MW 674.53). Dissolve XTT by careful warming solution (± 37°C) (cool down to room temperature before use). 1 drop Tween20 for 25ml buffer

### Sterilization of seeds - pregermination of seeds - growing of the seedlings

Seeds are soaked in 70% ethanol for 2 min, then surface-sterilized for 15 min in a sodium hypochlorite solution (with about 6% active chlorine) containing 0.1% Tween20. Finally, the seeds are rinsed with 11 of sterile tap water. Incubate seeds for at least one hour in sterile tap water (to allow diffusion from seeds of components that may inhibit germination). Seeds are put in 250ml erlenmeyer flasks containing 50ml of sterile tap water (+ 250mg/l triacillin). Shake for about 20 hours. Seeds from which the radicle is protruded are put in Vitro Vent containers from Duchefa containing about 125ml of sowing medium (10 seeds/vessel, not too many to reduce loss of seed by contamination). The seeds are germinated at ±24°C and 10-30µEinstein s⁻¹m⁻² with a daylength of 16h. For calculating the amount of seeds that have to be sawn: 5 hypocytyl segments/seedling.

### Preculture of the hypocotyl explants and induction of stress

12-14 days after sowing, the hypocotyls are cut in about 7-10mm segments. The hypocotyl explants (25 hypocotyls/Optilux Petridish, Falcon S1005, Denmark) are cultured for 5 days on medium A2S3 at 25°C (at 10-30µEinstein s⁻¹m⁻²). 150 hypocotyl explants are used per condition.

### Induction of stress

Transfer hypocotyl explants to A2S3 medium containing respectively 0, 25 and 50mg/l acetylsalicylic acid. Incubate for about 24 hours at 25°C and10-30-µEinstein s⁻¹m⁻² with a daylength of 16h.

### XTT-assay

Transfer 150 hypocotyl explants to a 50ml Falcon tube. Wash with reaction buffer (without XTT). Add 20mL reaction buffer + XTT. Explants have to be submerged, but do not vacuum infiltrate. Incubate in the dark at 26°C. Follow the reaction by measuring the absorption of the reaction medium at 470 nm.

### B. Arabidopsis thaliana

### Media and reaction buffers

*Plant medium:* Half concentrated Murashige and Skoog salts; B5 vitamins; 1.5% sucrose; pH 5.8; 0.7% Difco agar.

*Incubation medium*: 1/2 concentrated MS-salts; 1% sucrose ; 0.5g/L MES pH 5.8 ; 1 drop Tween20 for 25ml medium.

*Reaction buffer*: 25mM K-phosphate buffer pH 8; 1mM sodium,3'-{1-[phenylamino-carbonyl]-3,4-tetrazolium}-bis(4-methoxy-6-nitro) = XTT (BioVectra, Canada) (MW 674.53). Dissolve XTT by careful warming solution (± 37°C) (cool down to room temperature before use).1 drop Tween20 for 25ml buffer.

### Arabidopsis plants

*Arabidopsis lines:* control (mother line from which tested lines were derived); lines to test.

*Sterilization of Arabidopsis seeds:* 2min. 70% ethanol; 10 min. bleach (6% active chlorine) + 1 drop Tween 20 for 20ml solution; wash 5 times with sterile tap water; sterilization is done in 2ml eppendorf tubes. *Arabidopsis* seeds sink to the bottom of the tube, allowing removal of the liquids by means of a 1ml pipetman.

*Pregermination of seeds:* In 9cm Optilux Petridishes (Falcon) containing 12ml sterile tap water. Low light overnight to 24 hours.

*Growing of Arabidopsis plants:* Seeds are sown in Intergrid Tissue Culture disks of Falcon (nr. 3025) containing ±125ml of plant medium: 1 seed/grid. Plants are grown at 24°C. 30µEinstein s⁻¹m⁻². 16hours light - 8hours dark for about 18 days (before bolting). 1g of plant material (shoots without roots)/line/condition are needed to carry out the asssay. 1g shoots corresponds wilth 40-60 plants.

### Induction of stress

*Paraquat:* Harvest *Arabidopsis* shoots (without roots). Put 1g shoots in incubation medium (shoots have to be submerged, but do not vacuum infiltrate) containing respectively 0, 5 and 10µM paraquat. Incubation medium: ±150ml in Intergrid Tissue Culture disks of Falcon (nr. 3025). Incubate at 24°C in the dark for ±24 hours and 30-50µEinstein s⁻¹m⁻² with a daylength of 16h.

*High light:*_Transfer half of the plates to high light (250µEinstein s⁻¹m⁻²) and incubate for 4 to 20 hours.

### XTT-assay

Harvest shoots (without roots) from agar plates (high light stress) or from liquid incubation medium (paraquat stress) and put them in 50ml Falcon tubes containing reaction buffer (without XTT). Replace reaction buffer with buffer containing XTT (15mL/gr). Shoots have to be submerged, but do not vacuum infiltrate. Incubate in the dark at 26°C. Follow the reaction by measuring the absorption of the reaction medium at 470nm (about one hour).

### Example 2: Analysis of stress tolerance after application of neonicotinoid compounds on plants comprising a transgenic gene which increases stress tolerance.

Brassica plants comprising a transgenic gene encoding a dsRNA molecule which is capable of reducing endogenous PARP genes, as described in WO 00/04173 A1, (e.g. in Example 8) are treated with various concentrations of Imidacloprid, Clothianidin, Thiamethoxam, Acetamiprid, Nitenpyram, Dinotefuran, 6-chloronicotinic acid and Thiachloprid and subjected to various stress conditions, particularly high-low temperature, high light intensities or drought stress or any combination thereof

After treatment, the plants are visually scored for survival and damage as compared to untreated transgenic control plants, and to non-transgenic isogenic plants treated with the mentioned compounds in a similar manner. The level of reactive oxygen species, NAD and ATP are determined and compared to the control plants.

Transgenic Brassica plants treated with the chemical compounds survive stress conditions better than untreated transgenic control plants. The level of ROS is lower in the treated transgenic Brassica plants than in the untreated transgenic Brassica plants, while the level of NAD or ATP is higher.

Corn plants comprising a transgenic gene encoding a dsRNA molecule which is capable of reducing endogenous PARP genes, as described in WO 00/04173 A1, are treated with various concentrations of Imidacloprid, Clothianidin, Thiamethoxam, Acetamiprid, Nitenpyram, Dinotefuran, 6-chloronicotinic acid and Thiachloprid and subjected to various stress conditions, particularly high-low temperature, high light intensities or drought stress or any combination thereof.

After treatment, the plants are visually scored for survival and damage as compared to untreated transgenic control plants, and to non-transgenic isogenic plants treated with the mentioned compounds in a similar manner. The level of reactive oxygen species, NAD and ATP are determined and compared to the control plants.

Transgenic corn plants treated with the chemical compounds survive stress conditions better than untreated transgenic control plants. The level of ROS is lower in the treated transgenic corn plants than in the untreated transgenic corn plants, while the level of NAD or ATP is higher.

Cotton plants comprising a transgenic gene encoding a dsRNA molecule which is capable of reducing endogenous PARP genes, as described in EP 04077984.5 are treated with various concentrations of Imidacloprid, Clothianidin, Thiamethoxam, Acetamiprid, Nitenpyram, Dinotefuran, 6-chloronicotinic acid and Thiachloprid and subjected to various stress conditions, particularly high-low temperature, high light intensities or drought stress or any combination thereof

After treatment, the plants are visually scored for survival and damage as compared to untreated transgenic control plants, and to non-transgenic isogenic plants treated with the mentioned compounds in a similar manner. The level of reactive oxygen species, NAD and ATP are determined and compared to the control plants.

Transgenic cotton plants treated with the chemical compounds survive stress conditions better than untreated transgenic control plants. The level of ROS is lower in the treated transgenic cotton plants than in the untreated transgenic cotton plants, while the level of NAD or ATP is higher.

Brassica or rice plants comprising a transgenic gene encoding a dsRNA molecule which is capable of reducing endogenous PARG genes, as described in WO2004/090140 are treated with various concentrations of Imidacloprid, Clothianidin, Thiamethoxam, Acetamiprid, Nitenpyram, Dinotefuran, 6-chloronicotinic acid and Thiachloprid and subjected to various stress conditions, particularly high-low temperature, high light intensities or drought stress or any combination thereof

After treatment, the plants are visually scored for survival and damage as compared to untreated transgenic control plants, and to non-transgenic isogenic plants treated with the mentioned compounds in a similar manner. The level of reactive oxygen species, NAD and ATP are determined and compared to the control plants.

Transgenic Brassica or rice plants treated with the chemical compounds survive stress conditions better than untreated transgenic control plants. The level of ROS is lower in the treated transgenic Brassica or rice plants than in the untreated transgenic Brassica or rice plants, while the level of NAD or ATP is higher.

Arabidopsis plants comprising a transgenic gene encoding a plant functional enzyme involved in the NAD salvage pathway, as described in EP0477624.7 are treated with various concentrations of Imidacloprid, Clothianidin, Thiamethoxam, Acetamiprid, Nitenpyram, Dinotefuran, 6-chloronicotinic acid and Thiachloprid and subjected to various stress conditions, particularly high-low temperature, high light intensities or drought stress or any combination thereof

After treatment, the plants are visually scored for survival and damage as compared to untreated transgenic control plants, and to non-transgenic isogenic plants treated with the mentioned compounds in a similar manner. The level of reactive oxygen species, NAD and ATP are determined and compared to the control plants.

Transgenic Arabidopsis plants treated with the chemical compounds survive stress conditions better than untreated transgenic control plants. The level of ROS is lower in the treated transgenic Arabidopsis plants than in the untreated transgenic Arabidopsis plants, while the level of NAD or ATP is higher.

### Example 3:

## Claims

1. A method for increasing stress tolerance in a plant, comprising applying an effective amount of 6-chloronicotinic acid or a compound of formula (I) 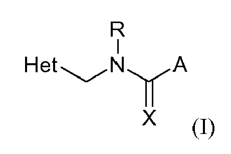 wherein
Het represents a heterocycle which is in each case optionally mono- or polysubstituted by fluorine, chlorine, methyl or ethyl, which heterocycle is selected from the following group of heterocycles:
pyrid-3-yl, pyrid-5-yl, 3-pyridinio, 1-oxido-5-pyridinio, 1-oxido-5-pyridinio, tetrahydrofuran-3-yl, thiazol-5-yl,
A represents C₁-C₆-alkyl, -N(R¹)(R²) or S(R²),
in which
R¹ represents hydrogen, C₁-C₆-alkyl, phenyl-C₁-C₄-alkyl, C₃-C₆-cycloalkyl, C₂-C₆-alkenyl or C₂-C₆-alkynyl, and R² represents C₁-C₆-alkyl, C₂-C₆-alkenyl, C₂-C₆-alkynyl, -C(=O)-CH₃ or benzyl,
R represents hydrogen, C₁-C₆-alkyl, C₂-C₆-alkenyl, C₂-C₆-alkynyl, -C(=O)-CH₃ or benzyl or together with R² represents the groups below:
-CH₂-CH₂-, -CH₂-CH₂-CH₂-, -CH₂-O-CH₂-, -CH₂-S-CH₂-, -CH₂-NH-CH₂-, -CH₂-N(CH₃)-CH₂-, and
X represents N-NO₂, N-CN or CH-NO₂
on said plant or on its locus, or on seeds of said plant, **characterized in that** said plant is a plant engineered to be stress tolerant.

2. The method according to claim 1, wherein said plant engineered to be stress tolerant is a transgenic plant comprising an exogenous gene which increases stress tolerance.

3. The method according to claim 2, wherein said exogenous gene codes for a PARP inhibitory RNA molecule.

4. The method according to claim 3, wherein said exogenous gene comprises the following operably linked DNA fragments:
a. a plant expressible promoter;
b. a DNA region coding for a PARP inhibitory RNA molecule comprising at least 19 out of 20 consecutive nucleotides selected from the nucleotide sequence of SEQ ID No 1, the nucleotide sequence of SEQ ID No 2, the nucleotide sequence of SEQ ID No 3, the nucleotide sequence of SEQ ID No 4, the nucleotide sequence of SEQ ID No 5 or the nucleotide sequence of SEQ ID No 6; and
c. a transcription termination and polyadenylation DNA region.

5. The method according to claim 3, wherein said exogenous gene comprises the following operably linked DNA fragments:
a. a plant expressible promoter;
b. a DNA region coding for a PARP inhibitory RNA molecule comprising at least 19 out of 20 consecutive nucleotides selected from the complement of the nucleotide sequence of SEQ ID No 1, the nucleotide sequence of SEQ ID No 2, the nucleotide sequence of SEQ ID No 3, the nucleotide sequence of SEQ ID No 4, the nucleotide sequence of SEQ ID No 5 or the nucleotide sequence of SEQ ID No 6; and
c. a transcription termination and polyadenylation DNA region.

6. The method according to claim 3, wherein said exogenous gene comprises the following operably linked DNA fragments:
a. a plant expressible promoter;
b. a DNA region coding for a PARP inhibitory RNA molecule, said RNA molecule comprising:
i. a sense nucleotide sequence comprising at least 19 out of 20 consecutive nucleotides selected from the nucleotide sequence of SEQ ID No 1, the nucleotide sequence of SEQ ID No 2, the nucleotide sequence of SEQ ID No 3, the nucleotide sequence of SEQ ID No 4, the nucleotide sequence of SEQ ID No 5 or the nucleotide sequence of SEQ ID No 6; and
ii. an antisense nucleotide sequence comprising a nucleotide sequence complementary to said at least 20 consecutive nucleotides in said sense nucleotide sequence
iii. wherein said sense and antisense nucleotide sequence are capable of forming a double stranded RNA region; and
c. a transcription termination and polyadenylation DNA region.

7. The method according to claim 6, wherein said antisense nucleotide sequence has about 95% sequence identity or is identical to said sense nucleotide sequence.

8. The method according to claim 2, wherein said exogenous gene codes for a ParG inhibitory RNA molecule.

9. The method according to claim 8, wherein said exogenous gene comprises the following operably linked DNA fragments:
a. a plant expressible promoter;
b. a DNA region coding for a PARG inhibitory RNA molecule comprising at least 19 out of 20 consecutive nucleotides selected from the nucleotide sequence of SEQ ID No 7, the nucleotide sequence of SEQ ID No 8, the nucleotide sequence of SEQ ID No 9 or the nucleotide sequence of SEQ ID No 10; and
c. a transcription termination and polyadenylation DNA region.

10. The method according to claim 3, wherein said exogenous gene comprises the following operably linked DNA fragments:
a. a plant expressible promoter;
b. a DNA region coding for a PARG inhibitory RNA molecule comprising at least 19 out of 20 consecutive nucleotides selected from the nucleotide sequence of SEQ ID No 7, the nucleotide sequence of SEQ ID No 8, the nucleotide sequence of SEQ ID No 9 or the nucleotide sequence of SEQ ID No 10;; and
c. a transcription termination and polyadenylation DNA region.

11. The method according to claim 3, wherein said exogenous gene comprises the following operably linked DNA fragments:
a. a plant expressible promoter;
b. a DNA region coding for a PARG inhibitory RNA molecule, said RNA molecule comprising:
i. a sense nucleotide sequence comprising at least 19 out of 20 consecutive nucleotides selected from the nucleotide sequence of SEQ ID No 7, the nucleotide sequence of SEQ ID No 8, the nucleotide sequence of SEQ ID No 9 or the nucleotide sequence of SEQ ID No 10; and
ii. an antisense nucleotide sequence comprising a nucleotide sequence complementary to said at least 20 consecutive nucleotides in said sense nucleotide sequence
iii. wherein said sense and antisense nucleotide sequence are capable of forming a double stranded RNA region; and
c. a transcription termination and polyadenylation DNA region.

12. The method according to claim 11, wherein said antisense nucleotide sequence has about 95% sequence identity or is identical to said sense nucleotide sequence.

13. The method according to claim 2, wherein said exogenous gene codes for a for a plant-functional enzyme of the nicotinamide adenine dinucleotide salvage synthesis pathway selected from nicotinamidase, nicotinate phosphoribosyltransferase, nicotinic acid mononucleotide adenyl transferase or nicotinamide adenine dinucleotide synthetase.

14. The method according to claim 13 , wherein said exogenous gene comprises a nucleotide sequence selected from the nucleotide sequence of SEQ ID 11, the nucleotide sequence of SEQ ID 12, the nucleotide sequence of SEQ ID 13, the nucleotide sequence of SEQ ID 14, the nucleotide sequence of SEQ ID 15, the nucleotide sequence of SEQ ID 16, the nucleotide sequence of SEQ ID 17, the nucleotide sequence of SEQ ID 18, the nucleotide sequence of SEQ ID 19, the nucleotide sequence of SEQ ID 20, the nucleotide sequence of SEQ ID 21 or the nucleotide sequence of SEQ ID 22.

15. The method of anyone of claims 1 to 14 wherein said compound selected from the class of neonicotinoids is imidacloprid.

16. The method of anyone of claims 1 to 14 wherein said compound selected from the class of neonicotinoids is clothianidin.

17. The method of anyone of claims 1 to 14 wherein said compound selected from the class of neonicotinoids is thiacloprid.

18. The method of anyone of claims 1 to 14 wherein said compound selected from the class of neonicotinoids is nitenpyram.

19. The method of anyone of claims 1 to 14 wherein said compound selected from the class of neonicotinoids is acetamiprid.

20. The method of anyone of claims 1 to 14 wherein said compound is 6-chloronicotinic acid.

21. The use of a compound in accordance with claim 1 for increasing stress tolerance of a plant engineered to be stress tolerant according to anyone of claims 2 to 14.

22. A seed of a plant engineered to be stress tolerant according to anyone of claims 2 to 14 which has been treated with a compound according to claim 1.

23. A method for increasing stress tolerance in a plant, comprising treating the soil in which a the seed of a plant engineered to be stress tolerant in accordance with anyone of claims 2 to 14 is planted with an effective amount of 6-chloronicotinic acid or a compound of formula (I) according to claim 1

24. A method according to claim 1, wherein the plant is said transgenic stress tolerant dicotyledonous or monocotyledonous plant, plant cell or seed thereof.

25. A method according to claim 1, wherein the seed is treated with an amount of a compound according to claim 1 from 0,1 g/100kg of seed to 1000 g/100kg of seed.

26. A method according to claim 1, wherein the plant is treated with an application rate from 10 g to 1600 g per hectare of a compound according to claim 1.

27. A package comprising at least
a. a chemical compound according to claim 1, and
b. a plant engineered to be stress tolerant or a seed of said plant according to anyone of claims 2 to 14.
